(19) Europäisches Patentamt
European Patent Office
Office européen des brevets

(11) Veröffentlichungsnummer: **0 347 685 B1**

(12) **EUROPÄISCHE PATENTSCHRIFT**

(45) Veröffentlichungstag der Patentschrift: **30.11.94**

(51) Int. Cl.5: **C09B 67/22**, D06P 1/18, //C09B29/08

(21) Anmeldenummer: **89110536.3**

(22) Anmeldetag: **10.06.89**

(54) **Mischungen blauer Dispersionsazofarbstoffe.**

(30) Priorität: **24.06.88 DE 3821338**

(43) Veröffentlichungstag der Anmeldung:
**27.12.89 Patentblatt 89/52**

(45) Bekanntmachung des Hinweises auf die Patenterteilung:
**30.11.94 Patentblatt 94/48**

(84) Benannte Vertragsstaaten:
**CH DE FR GB LI**

(56) Entgegenhaltungen:
**EP-A- 336 163**
**EP-A- 346 715**
**EP-A- 0 147 783**
**GB-A- 2 178 751**

(73) Patentinhaber: **BAYER AG**
**D-51368 Leverkusen (DE)**

(72) Erfinder: **Hoppe, Manfred, Dr.**
**Koelner Strasse 233**
**D-5067 Kuerten 2 (DE)**
Erfinder: **Wiegner, Dieter**
**Nothauser Feld 4**
**D-5068 Odenthal (DE)**
Erfinder: **Sagner, Klaus-Peter, D.I.**
**Schubertstrasse 1**
**D-5090 Leverkusen 1 (DE)**
Erfinder: **Jordan, Heinz Dietrich, Dr.**
**Kurt-Schumacher-Ring 69 a**
**D-5090 Leverkusen 1 (DE)**
Erfinder: **Brandt, Horst, Dr.**
**Antoniusstrasse 4**
**D-5068 Odenthal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft Mischungen von Azofarbstoffen für das Färben von hydrophoben synthetischen Fasern, die sich z.B. als Ersatz für das anthrachinoide C.I. Disperse Blue 56 (C.I.-Nr. 63285) bzw. Farbstoffe mit einem Bunttonwinkel $h_{ab}$ von etwa 295° (bezogen auf eine Polyesterfärbung in 1/1 Richtyptiefe nach DIN 5033/3) eignen.

Disperse Blue 56 gilt weltweit als bedeutender blauer Dispersionsfarbstoff, da dieser auf den genannten Fasermaterialien zu besonders klaren rotstichig blauen Färbungen mit hoher Lichtechtheit führt. Andererseits weist dieser Farbstoff eine Reihe von Nachteilen auf:

Wie fast alle Anthrachinonfarbstoffe hat Disperse Blue 56 eine geringe Farbstärke, was insbesondere bei hohen Farbtiefen eine beträchtliche Kostensteigerung zur Folge hat.

Bei der Färbung von Mischungen aus Polyester-Fasern sowie Wolle, Baumwolle und Regenerat-Cellulose werden diese Begleitfasern stark angeschmutzt. Diese Anschmutzung läßt sich auch durch eine reduktive Nachbehandlung nicht vollständig entfernen.

Beim Färben mit den modernen Schnellfärbeverfahren besteht die große Gefahr einer unegalen Färbung. Disperse Blue 56 gehört, falls man nicht eine überlange Färbedauer für das nachträgliche Egalisieren zur Anwendung bringt, zu den besonders schlecht egalisierenden Dispersions-Blaufarbstoffen.

Nachteilig ist weiterhin die Empfindlichkeit von Disperse Blue 56 gegenüber Metallionen - insbesondere Kupfer - im Färbebad, weswegen diesem häufig Komplexbildner zugesetzt werden müssen.

Um die Unzulänglichkeiten des Anthrachinonfarbstoffes zumindest teilweise zu beseitigen, ist bereits vorgeschlagen worden, Disperse Blue 56 durch ausgewählte blaue Azofarbstoffe (vgl. O. Annen. R. Egli, R. Hasler, B. Henzi, H. Jakob und P. Matzinger REV. PROGR. COLORATION, 72 Vol 17 (1987), sowie durch spezielle Mischungen von Azofarbstoffen (vgl. DE-A 3 347 572 = US-A 4 608 050) zu ersetzen.

Darüber hinaus sind als "Blau 56-Ersatz" Verschnitte des teuren Anthrachinonfarbstoffs mit preiswerten Azofarbstoffen sowie Mischungen anderer Anthrachinonfarbstoffe mit Azoverbindungen empfohlen worden (vgl. DE-A 3 023 330 = US-A 4 374 642 sowie DE-A 3 043 184).

Abgesehen davon, daß die Verschnitte bereits von der Aufgabenstellung her einen Weg in die falsche Richtung darstellen, konnte keine der vorstehend genannten Vorschläge zu einem vollwertigen Ersatz von Disperse Blue 56 führen, da diese Ersatzprodukte nicht das hohe Niveau dieses Anthrachinonfarbstoffs erreichen.

Es wurde nun gefunden, daß man zu einem in praktisch allen wichtigen Eigenschaften gleichwertigen und teilweise deutlich verbessertem Ersatzprodukt für Disperse Blue 56 durch Einsatz einer Farbstoffkombination mit einem Bunttonwinkel von 290-300°, vorzugsweise 293-297°, gelangt, die dadurch gekennzeichnet ist, daß sie

a) mindestens einem Farbstoff der Formel (I)

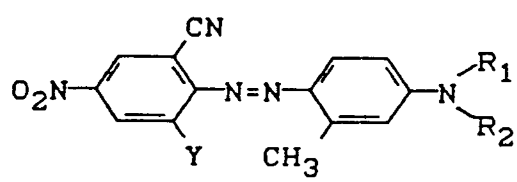

I

und

b) mindestens einen Farbstoff der Formeln II-III

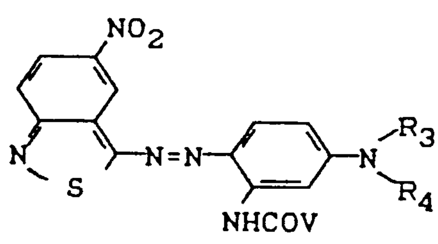

II

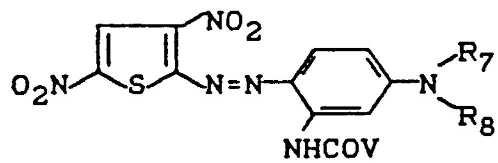

III

enthält,
worin - unabhängig voneinander -

- Y — $NO_2$ oder CN,
- V — H, Alkyl, Aryl oder Alkoxy,
- $R_1$ — Alkyl, Aralkyl, Alkoxyalkyl oder Alkenyl,
- $R_2$ — $R_1$, Chloralkyl, Aryloxyalkyl oder Alkoxycarbonylalkyl,
- $R_3$ — Alkyl, Aralkyl, Alkoxyalkyl, Hydroxyalkyl, Aryloxyalkyl oder Alkenyl,
- $R_4$ — $R_3$, $C_2$-$C_4$-Chloralkyl oder Alkoxycarbonylalkyl,
- $R_7$ — Alkyl, Aralkyl, Alkoxyalkyl, Hydroxyalkyl, Aryloxyalkyl, Chloralkyl, Alkoxycarbonylalkyl, Alkenyl oder Acyloxyalkyl und
- $R_8$ — $R_7$ bedeuten,

wobei Acylreste Alkylcarbonyl- oder Arylcarbonylreste, im beliebigen Zusammenhang genannte Alkyl-, Alkenyl- und Alkoxyreste solche mit 1-4 C-Atomen und im beliebigen Zusammenhang genannte Arylreste Phenylreste sind, die durch Cl oder $C_1$-$C_4$-Alkyl substituiert sein können.

Bevorzugt sind Farbstoffe der angegebenen Formeln, worin

- Y — $NO_2$ oder CN,
- V — Alkyl, Aryl oder Alkoxy,
- $R_1$ — Alkyl, Alkoxyalkyl oder Alkenyl,
- $R_2$ — $R_1$, Aralkyl, Aryloxyalkyl,
- $R_3$ — Alkyl, Aralkyl, Alkoxyalkyl oder Alkenyl,
- $R_4$ — $R_3$
- $R_7$ — Alkyl, Aralkyl, Alkoxyalkyl, Aryloxalkyl oder Alkenyl und
- $R_8$ — $R_7$ bedeuten, wobei die genannten Reste die vorstehend angegebenen speziellen Bedeutungen haben.

Besonders bevorzugt sind Farbstoffe der angegebenen Formel, worin

- Y — $NO_2$ oder CN,
- V — Alkyl,
- $R_1$ — Alkyl,
- $R_2$ — $R_1$, Alkoxyalkyl oder Aralkyl,
- $R_3$ — Alkoxyalkyl,
- $R_4$ — $R_3$ oder Alkyl,
- $R_7$ — Alkyl und
- $R_8$ — $R_7$ oder Alkoxyalkyl bedeuten, wobei die genannten Reste die oben angegebenen speziellen Bedeutungen haben.

Besonders geeignet sind die Farbstoffe der Formel I-III, worin

- Y — CN
- V — Methyl oder Ethyl,
- $R_1$, $R_2$ — Ethyl, n-Propyl oder n-Butyl,
- $R_3$, $R_4$ — Methoxyethyl und
- $R_7$, $R_8$ — Ethyl oder n-Propyl bedeuten.

Die Farbstoffe der Formeln I-III sind bekannt bzw. nach an sich bekannten Methoden leicht zugänglich und z.B. in folgender Patentliteratur beschrieben: DE-A 1 290 915 = US-A 4 105 655; DE-A 3 425 127 = US-A 4 681 932; DE-A 2 818 653 = GB-A 1 582 743; DE-A 2 304 218 = US-A 4 079 050.

Beispielhaft seien die in nachfolgenden Tabellen aufgeführten Farbstoffindividuen genannt:

Tabelle 1: Farbstoffe der Formel I, worin Y sowohl für CN als auch für $NO_2$ steht

| $R_1$ | $R_2$ | $R_1$ | $R_2$ |
|---|---|---|---|
| $CH_3$ | $CH_3$ | $-C_2H_5$ | $-CH_2-CH_2-O-CH_3$ |
| $CH_3$ | $C_2H_5$ | $-C_2H_5$ | $-CH_2-CH_2-OC_2H_5$ |
| $CH_3$ | $CH_2-CH_2-CH_3$ | $-C_2H_5$ | $-CH_2-CH_2-O-CH_2-CH_2-CH_3$ |
| $CH_3$ | $CH-(CH_3)_2$ | $-C_2H_5$ | $-CH_2-CH_2-Cl$ |
| $CH_3$ | $-CH_2-CH_2-CH_2-CH_3$ | $-C_2H_5$ | $-CH_2-CH_2-O$ 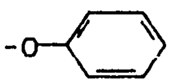 |
| $CH_3$ | $-CH_2-CH=CH_2$ | $-C_2H_5$ | $-CH_2-CH_2-O$ 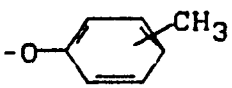 |
| $CH_3$ | $-CH_2$ 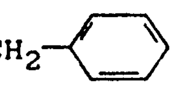 | $-C_2H_5$ | $-CH_2-CH_2-O$ 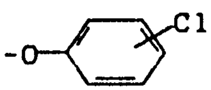 |
| $CH_3$ | $-CH_2-CH_2-CH_2$ 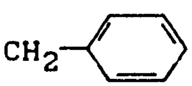 | | |
| $CH_3$ | $-CH_2-CH_2-O-CH_3$ | $-CH_2-CH_2-CH_3$ | $CH_2-CH_2-CH_3$ |
| $CH_3$ | $-CH_2-CH_2-OC_2H_5$ | $-CH_2-CH_2-CH_3$ | $CH-(CH_3)_2$ |
| $CH_3$ | $-CH_2-CH_2-O-CH_2-CH_2-CH_3$ | $-CH_2-CH_2-CH_3$ | $-CH_2-CH_2-CH_2-CH_3$ |
| $CH_3$ | $-CH_2-CH_2-Cl$ | $-CH_2-CH_2-CH_3$ | $-CH_2-CH=CH_2$ |

**Tabelle 1: Farbstoffe der Formel I**

| $R_1$ | $R_2$ | $R_1$ | $R_2$ |
|---|---|---|---|
| $CH_3$ | $-CH_2-CH_2-O-$ 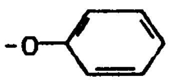 | $-CH_2-CH_2-CH_3$ | $-CH_2-$ 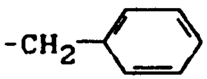 |
| $CH_3$ | $-CH_2-CH_2-O-$ 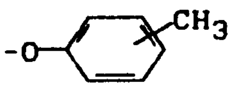 | $-CH_2-CH_2-CH_3$ | $-CH_2-CH_2-CH_3-$ 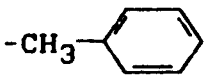 |
| $CH_3$ | $-CH_2-CH_2-O-$ 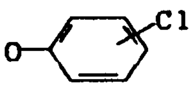 | $-CH_2-CH_2-CH_3$ | $-CH_2-CH_2-O-CH_3$ |
| $C_2H_5$ | $C_2H_5$ | $-CH_2-CH_2-CH_3$ | $-CH_2-CH_2-OC_2H_5$ |
| $C_2H_5$ | $CH_2-CH_2-CH_3$ | $-CH_2-CH_2-CH_3$ | $-CH_2-CH_2-O-CH_2-CH_2-CH_3$ |
| $C_2H_5$ | $CH-(CH_3)_2$ | $-CH_2-CH_2-CH_3$ | $-CH_2-CH_2-Cl$ |
| $C_2H_5$ | $-CH_2-CH_2-CH_2-CH_3$ | $-CH_2-CH_2-CH_3$ | $-CH_2-CH_2-O-$ 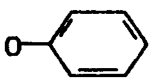 |
| $C_2H_5$ | $-CH_2-CH=CH_2$ | $-CH_2-CH_2-CH_3$ | $-CH_2-CH_2-O-$ 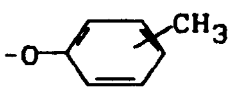 |

**Tabelle 1**: Farbstoffe der Formel I

| $R_1$ | $R_2$ | $R_1$ | $R_2$ |
|---|---|---|---|
| $C_2H_5$ | $-CH_2$ 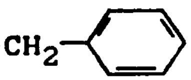 | $-CH_2-CH_2-CH_3$ | $-CH_2-CH_2-O$ 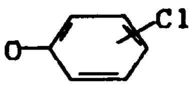 |
| $C_2H_5$ | $-CH_2-CH_2-CH_3$ 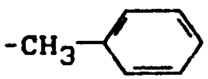 | | |
| $CH_2-(CH_2)_2-CH_3$ | $-CH-(CH_3)_2$ | $CH_2-(CH_2)_2-CH_3$ | $-CH_2-CH_2-OC_2H_5$ |
| $CH_2-(CH_2)_2-CH_3$ | $-CH_2-CH_2-CH_2-CH_3$ | $CH_2-(CH_2)_2-CH_3$ | $-CH_2-CH_2-O-CH_2-CH_2-CH_3$ |
| $CH_2-(CH_2)_2-CH_3$ | $-CH_2-CH=CH_2$ | $CH_2-(CH_2)_2-CH_3$ | $-CH_2-CH_2-Cl$ |
| $CH_2-(CH_2)_2-CH_3$ | $-CH_2$ 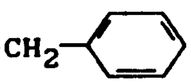 | $CH_2-(CH_2)_2-CH_3$ | $-CH_2-CH_2-O$ 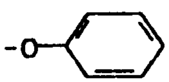 |
| $CH_2-(CH_2)_2-CH_3$ | $-CH_2-CH_2-CH_3$ 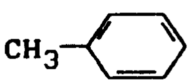 | $CH_2-(CH_2)_2-CH_3$ | 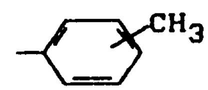 |
| $CH_2-(CH_2)_2-CH_3$ | $-CH_2-CH_2-O-CH_3$ | $CH_2-(CH_2)_2-CH_3$ | 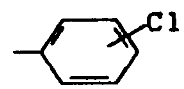 |

Tabelle 2: Farbstoffe der Formel II

| V | $R_3$ | $R_4$ |
|---|---|---|
| $CH_3$ | $CH_3$ | $CH_3$ |
| $CH_3$ | $C_2H_5$ | $C_2H_5$ |
| $CH_3$ | $CH_2-CH_2-CH_3$ | $CH_2-CH_2-CH_3$ |
| $CH_3$ | $C_2H_5$ | $CH_2-CH_2-O-CH_3$ |
| $CH_3$ | $C_2H_5$ | $CH_2-CH_2-O-C_2H_5$ |
| $CH_3$ | $-(CH_2)_2-CH_3$ | $CH_2-CH_2-O-CH_3$ |
| $CH_3$ | $-(CH_2)_2-CH_3$ | $CH_2-CH_2-O-C_2H_5$ |
| $CH_3$ | $CH_2-CH_2-OCH_3$ | $CH_2-CH_2-OCH_3$ |
| $CH_3$ | $CH_2-CH_2-O-C_2H_5$ | $CH_2-CH_2-OC_2H_5$ |
| $C_2H_5$ | $CH_3$ | $CH_3$ |
| $C_2H_5$ | $C_2H_5$ | $C_2H_5$ |
| $C_2H_5$ | $CH_2-CH_2-CH_3$ | $CH_2-CH_2-CH_3$ |
| $C_2H_5$ | $C_2H_5$ | $CH_2-CH_2-O-CH_3$ |
| $C_2H_5$ | $C_2H_5$ | $CH_2-CH_2-O-C_2H_5$ |
| $C_2H_5$ | $-(CH_2)_2-CH_3$ | $CH_2-CH_2-O-CH_3$ |
| $C_2H_5$ | $-(CH_2)_2-CH_3$ | $CH_2-CH_2-O-C_2H_5$ |
| $C_2H_5$ | $CH_2-CH_2-OCH_3$ | $CH_2-CH_2-OCH_3$ |
| $C_2H_5$ | $CH_2-CH_2-O-C_2H_5$ | $CH_2-CH_2-OC_2H_5$ |

Tabelle 2: Farbstoffe der Formel II

| V | $R_3$ | $R_4$ |
|---|---|---|
| $CH_2$-$CH_2$-$CH_3$ | $CH_3$ | $CH_3$ |
| $CH_2$-$CH_2$-$CH_3$ | $C_2H_5$ | $C_2H_5$ |
| $CH_2$-$CH_2$-$CH_3$ | $CH_2$-$CH_2$-$CH_3$ | $CH_2$-$CH_2$-$CH_3$ |
| $CH_2$-$CH_2$-$CH_3$ | $C_2H_5$ | $CH_2$-$CH_2$-O-$CH_3$ |
| $CH_2$-$CH_2$-$CH_3$ | $C_2H_5$ | $CH_2$-$CH_2$-O-$C_2H_5$ |
| $CH_2$-$CH_2$-$CH_3$ | -$(CH_2)_2$-$CH_3$ | $CH_2$-$CH_2$-O-$CH_3$ |
| $CH_2$-$CH_2$-$CH_3$ | -$(CH_2)_2$-$CH_3$ | $CH_2$-$CH_2$-O-$C_2H_5$ |
| $CH_2$-$CH_2$-$CH_3$ | $CH_2$-$CH_2$-$OCH_3$ | $CH_2$-$CH_2$-$OCH_3$ |
| $CH_2$-$CH_2$-$CH_3$ | $CH_2$-$CH_2$-O-$C_2H_5$ | $CH_2$-$CH_2$-$OC_2H_5$ |
| $CH_2$-$CH_2$-$CH_2$-$CH_3$ | $CH_3$ | $CH_3$ |
| $CH_2$-$CH_2$-$CH_2$-$CH_3$ | $C_2H_5$ | $C_2H_5$ |
| $CH_2$-$CH_2$-$CH_2$-$CH_3$ | $CH_2$-$CH_2$-$CH_3$ | $CH_2$-$CH_2$-$CH_3$ |
| $CH_2$-$CH_2$-$CH_2$-$CH_3$ | $C_2H_5$ | $CH_2$-$CH_2$-O-$CH_3$ |
| $CH_2$-$CH_2$-$CH_2$-$CH_3$ | $C_2H_5$ | $CH_2$-$CH_2$-O-$C_2H_5$ |
| $CH_2$-$CH_2$-$CH_2$-$CH_3$ | -$(CH_2)_2$-$CH_3$ | $CH_2$-$CH_2$-O-$CH_3$ |
| $CH_2$-$CH_2$-$CH_2$-$CH_3$ | -$(CH_2)_2$-$CH_3$ | $CH_2$-$CH_2$-O-$C_2H_5$ |
| $CH_2$-$CH_2$-$CH_2$-$CH_3$ | $CH_2$-$CH_2$-$OCH_3$ | $CH_2$-$CH_2$-$OCH_3$ |
| $CH_2$-$CH_2$-$CH_2$-$CH_3$ | $CH_2$-$CH_2$-O-$C_2H_5$ | $CH_2$-$CH_2$-$OC_2H_5$ |

Tabelle 3

| Farbstoffe der Formel III | | |
|---|---|---|
| V | $R_7$ | $R_8$ |
| $CH_3$ | $C_2H_5$ | $C_2H_5$ |
| $C_2H_5$ | $C_2H_5$ | $C_2H_5$ |
| $CH_2$-$CH_2$-$CH_3$ | $C_2H_5$ | $C_2H_5$ |
| $(CH_2)_3$-$CH_3$ | $C_2H_5$ | $C_2H_5$ |
| $CH_3$ | $CH_2$-$CH_2$-$CH_3$ | $CH_2$-$CH_2$-$CH_3$ |
| $C_2H_5$ | $CH_2$-$CH_2$-$CH_3$ | $CH_2$-$CH_2$-$CH_3$ |
| $CH_2$-$CH_2$-$CH_3$ | $CH_2$-$CH_2$-$CH_3$ | $CH_2$-$CH_2$-$CH_3$ |
| -$(CH_2)_3$-$CH_3$ | $CH_2$-$CH_2$-$CH_3$ | $CH_2$-$CH_2$-$CH_3$ |
| $CH_3$ | $CH_2$-$CH_2$-$CH_3$ | -$CH_2$-$CH_2$-$OCH_3$ |
| $CH_3$ | $CH_2$-$CH_2$-$CH_3$ | -$CH_2$-$CH_2$-$OC_2H_5$ |

Der Gewichtsanteil der einzelnen Mischungskomponenten in den erfindungsgemäßen Gemischen beträgt im allgemeinen:
20 bis 90 % Komponente I,
0 bis 80 % Komponente II,

0 bis 80 % Komponente III
mit der Maßgabe, daß mindestens einer der Farbstoffe II bis III den Farbstoff I auf 100 % ergänzt.

In einem anderen Mischungstyp betragen die Anteile:
10 bis 90 % Komponente I,
10 bis 80 % Komponente III.

Bevorzugt sind Zweiermischungen von I mit II oder III mit folgenden Anteilen:
a) 25 bis 80 % Komponente I,
20 bis 75 % Komponente II,
b) 30 bis 90 % Komponente I,
10 bis 70 % Komponente III
Ganz besonders bevorzugt sind Mischungen des Farbstoffs A mit den Farbstoffen B und C:

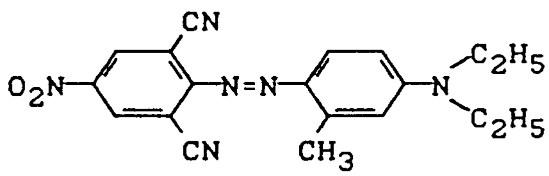

(A)

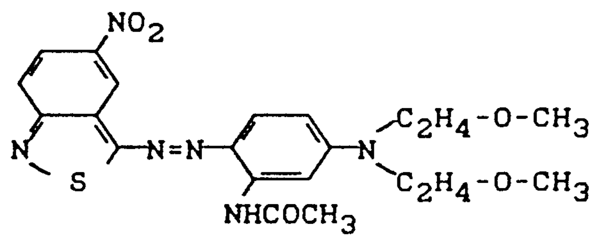

(B)

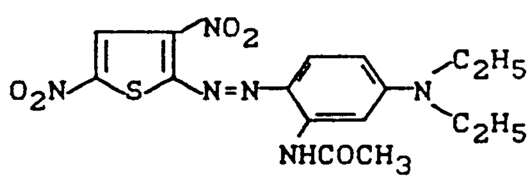

(C)

wobei folgende Mischungsverhältnisse bevorzugt sind:
a) 10 bis 90 % Farbstoff A
10 bis 90 % Farbstoff B
b) 50 bis 70 % Farbstoff A
30 bis 50 % Farbstoff B
c) 55 bis 65 % Farbstoff A
35 bis 45 % Farbstoff B
d) 40 bis 70 % Farbstoff A
15 bis 45 % Farbstoff B
5 bis 20 % Farbstoff C
e) 60 bis 85 % Farbstoff A
15 bis 40 % Farbstoff
Die neuen Farbstoffmischungen können nach verschiedenen Verfahren hergestellt werden:
1. durch Abmischen der separat hergestellten und formierten Einzelkomponenten, oder
2. durch gemeinsame Formierung der separat hergestellten Einzelfarbstoffkomponenten.

Die "Cyanierung" von ortho-Halogenazofarbstoffen sowie die dabei erhaltenen Dicyanfarbstoffe - als solche - sind allgemein bekannt (vgl. DE-A 1 544 563 = US-A 3 962 209 sowie DE-A 3 009 635).

Auch die Formierung zur Herstellung verkaufsfähiger Präparationen erfolgt nach an sich bekannten Verfahren.

Die neuen Farbstoffmischungen eignen sich insbesondere zum Färben von Polyster- und Celluloseesterfasern und ergeben sehr klare rotstichig blaue Färbungen mit sehr guten Licht- und Waschechtheiten.

Ein zusätzlicher Vorteil liegt in den geringen Anschmutzung von Begleitgeweben bei Polyester-Mischgewebe-Färbungen.

In den nachfolgenden Beispielen bedeuten "Teile" und "%" = Gewichtsteile bzw. Gewichtsprozente.

Beispiel 1

Durch Perlmahlung und anschließende Sprühtrocknung wird ein Färbepräparat aus
11,2 Teilen des Farbstoffs A
9,9 Teilen des Farbstoffs B
25,6 Teilen eines handelsüblichen Ligninsulfonates
46,4 Teilen eines handelsüblichen Dispergiermittels (z.B. Kondensationsprodukt aus Formaldehyd, Naphthalin und Schwefelsäure)
0,2 Teilen eines handelsüblichen Netzmittels
0,7 Teilen eines handelsüblichen Entstaubungsmittels
6,0 Teilen Restfeuchte
hergestellt.

In einem Färbebad, das mit Natriumphosphat und Essigsäure auf einen pH-Wert von 4,5 gestellt ist werden 100 Teile eines Polyestergewebes (Polyethylenterephthalat) 30 bis 45 Minuten bei 125 bis 135 °C mit 1,3 g des oben beschriebenen Färbepräparates (Flottenverhältnuis 1:10 bis 1:40) gefärbt.

Man erhält klare rotstichig blaue Färbungen mit guten Echtheiten.

Beispiel 2

In einem Färbebad, das 5 g/l eines handelsüblichen Carriers (z.B. auf Basis aromatischer Carbonester) enthält, mit Natriumphosphat und Essigsäure auf einen pH von 4,5 gestellt ist, werden 100 Teile eines Polyestergewebes mit 1,3 Teile der oben beschriebenen Farbstoffpräparation 30 Minuten bei 90 bis 105 °C gefärbt. Man erhält volle, tiefe blaue Färbungen mit guten Echtheiten.

Beispiel 3

In einem Färbebad, das mit Natriumphosphat und Essigsäure auf einen pH-Wert von 4,5 gestellt ist werden 200 Teile eines Polyester-(Polyethylenterephthalat)Baumwollmischgewebes 50/50 30 bis 45 Minuten bei 125 bis 135 °C mit 1,3 Teile des oben beschriebenen Färbepräparates (Flottenverhältnis 1:10 bis 1:40) gefärbt. Man erhält klare blaue Färbungen mit guten Echtheiten wobei das Baumwollbegleitgewebe nur wenig angeschmutzt ist.

Beispiel 4

In einem Färbebad, das 5 g/l eines handelsüblichen Carriers (z.B. auf Basis aromatischer Carbonester) enthält, mit Natriumphosphat und Essigsäure auf einen pH von 4,5 gestellt ist, werden 200 Teile eines Polyester-Wollemischgewebes 50/50 mit 1,3 Teile der oben beschriebenen Farbstoffpräparation 30 Minuten bei 90 bis 105 °C gefärbt. Man erhält volle, tiefe blaue Färbungen mit guten Echtheiten.

Zu ähnlichen Ergebnissen kommt man bei Verwendung nachstehender Mischungen.

Beispiel 5

55 % Farbstoff I (mit $R_1$, $R_2$ = n-Butyl und y = CN)
45 % Farbstoff B

Beispiel 6

59 % Farbstoff A
41 % Farbstoff B

Beispiel 7

60 % Farbstoff A
31 % Farbstoff B
9 % Farbstoff C

Beispiel 8

72 % Farbstoff A
28 % Farbstoff C

Beispiel 9

62 % Farbstoff A
38 % Farbstoff B

Beispiel 10

53 % Farbstoff A
47 % Farbstoff B

**Patentansprüche**

1. Mischung von Dispersionsazofarbstoffen mit einem Bunttonwinkel $h_{ab}$ von 290 bis 300°, bezogen auf eine Polyesterfärbung in 1/1 Richttyptiefe gemäß DIN 5033/Teil 3, dadurch gekennzeichnet, daß sie
   a) mindestens einen Farbstoff der Formel (I)

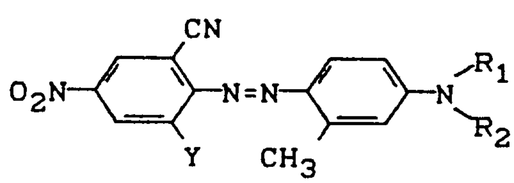

I

und

b) mindestens einen Farbstoff der Formeln II-III

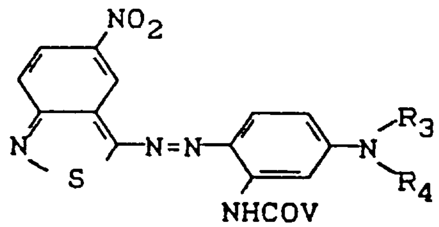

II

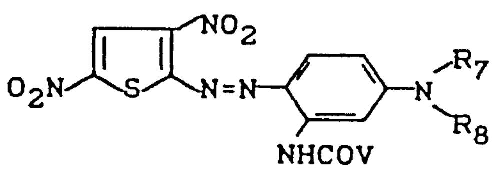

III

enthält,
worin - unabhängig voneinander -

Y $NO_2$ oder CN,
V H, Alkyl, Aryl oder Alkoxy,
$R_1$ Alkyl, Aralkyl, Alkoxyalkyl oder Alkenyl,
$R_2$ $R_1$, Chloralkyl, Aryloxyalkyl oder Alkoxycarbonylalkyl,
$R_3$ Alkyl, Aralkyl, Alkoxyalkyl, Hydroxyalkyl, Aryloxyalkyl oder Alkenyl,
$R_4$ $R_3$, $C_2$-$C_4$-Chloralkyl oder Alkoxycarbonylalkyl,
$R_7$ Alkyl, Aralkyl, Alkoxyalkyl, Hydroxyalkyl, Aryloxyalkyl, Chloralkyl, Alkoxycarbonylalkyl, Alkenyl oder Acyloxyalkyl und
$R_8$ $R_7$ bedeuten, wobei Acylreste Alkylcarbonyl- oder Arylcarbonylreste, im beliebigen Zusammenhang genannte Alkyl-, Alkenyl- und Alkoxyreste solche mit 1-4 C-Atomen und im beliebigen Zusammenhang genannte Arylreste Phenylreste sind, die durch Cl oder $C_1$-$C_4$-Alkyl substituiert sein können.

**2.** Mischungen von Dispersionsazofarbstoffen gemäß Anspruch 1, dadurch gekennzeichnet, daß

Y $NO_2$ oder CN,
V Alkyl,
$R_1$ Alkyl,
$R_2$ $R_1$, Alkoxyalkyl oder Aralkyl,
$R_3$ Alkoxyalkyl,
$R_4$ $R_3$ oder Alkyl,
$R_7$ Alkyl und
$R_8$ $R_7$ oder Alkoxyalkyl bedeuten, wobei die genannten Reste die oben angegebenen speziellen Bedeutungen haben.

**3.** Mischung von Dispersionsazofarbstoffen gemäß Anspruch 1, dadurch gekennzeichnet, daß in den darin angegebenen Formeln

Y CN
V Methyl oder Ethyl,
$R_1$, $R_2$ Ethyl, n-Propyl oder n-Butyl,
$R_3$, $R_4$ Methoxyethyl und

$R_7$, $R_8$ Ethyl oder n-Propyl bedeuten.

4. Mischungen von Dispersionsazofarbstoffen gemäß Anspruch 1, dadurch gekennzeichnet, daß der Gewichtsanteil der Komponente I 20 bis 90 %, der Komponente II 0 bis 80 % und der Komponente III 0 bis 80 % beträgt, mit der Maßgabe, daß mindestens einer der Farbstoffe II bis III den Farbstoff I auf 100 % ergänzt.

5. Mischungen von Dispersionsazofarbstoffen gemäß Anspruch 1, dadurch gekennzeichnet, daß der Gewichtsanteil der Komponente I 10 bis 90 % und der Komponente III 10 bis 80 % beträgt.

6. Mischungen von Dispersionsazofarbstoffen gemäß Anspruch 1, dadurch gekennzeichnet, daß der Gewichtsanteil der
Komponente I 25 bis 80 % und Komponente II 20 bis 75 % oder
Komponente I 30 bis 90 % und Komponente III 10 bis 70 % beträgt.

7. Mischungen der Dispersionsazofarbstoffe gemäß Anspruch 1, dadurch gekennzeichnet, daß diese einen Farbstoff der Formel (A)

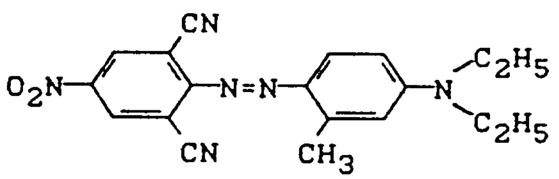

(A)

und mindestens einen Farbstoff der Formel (B bis C)

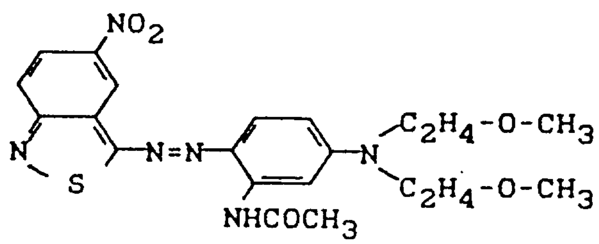

(B)

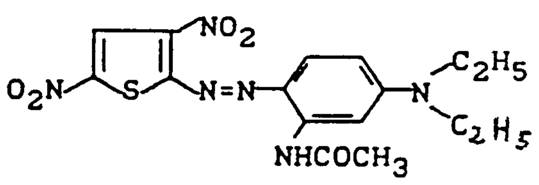

(C)

enthält.

8. Farbstoffpräparationen, enthaltend Mischungen von Azofarbstoffen gemäß Ansprüchen 1 bis 8.

9. Verfahren zum Färben von hydrophoben synthetischen Fasern, dadurch gekennzeichnet, daß man Farbstoffmischungen bzw. Präparationen gemäß Ansprüchen 1 bis 8 verwendet.

**Claims**

1. Mixture of disperse azo dyestuffs having a hue angle $h_{ab}$ of 290 to 300°, based on a polyester dyeing in a 1/1 standard depth of shade according to DIN 5033/Part 3, characterized in that it contains

a) at least one dyestuff of the formula (I)

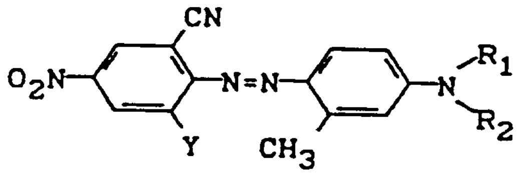

I

and

b) at least one dyestuff of the formulae II-III

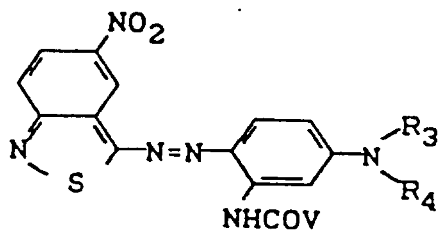

II

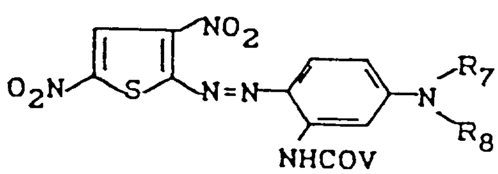

III

wherein - independently of one another -

Y denotes $NO_2$ or CN,

V denotes H, alkyl, aryl or alkoxy,

$R_1$ denotes alkyl, aralkyl, alkoxyalkyl or alkenyl,

$R_2$ denotes $R_1$, chloroalkyl, aryloxyalkyl or alkoxycarbonylalkyl,

$R_3$ denotes alkyl, aralkyl, alkoxyalkyl, hydroxyalkyl, aryloxyalkyl or alkenyl,

$R_4$ denotes $R_3$, $C_2$-$C_4$-chloroalkyl or alkoxycarbonylalkyl,

$R_7$ denotes alkyl, aralkyl, alkoxyalkyl, hydroxyalkyl, aryloxyalkyl, chloroalkyl, alkoxycarbonylalkyl, alkenyl or acyloxyalkyl and

$R_8$ denotes $R_7$,

where acyl radicals are alkylcarbonyl or arylcarbonyl radicals, alkyl, alkenyl and alkoxy radicals, in whatever connection they are mentioned, are those with 1-4 C-atoms, and aryl radicals, in whatever connection they are mentioned, are phenyl radicals which can be substituted by Cl or $C_1$-$C_4$-alkyl.

**2.** Mixtures of disperse azo dyestuffs according to Claim 1, characterized in that

Y denotes $NO_2$ or CN,

V denotes alkyl,

$R_1$ denotes alkyl,

$R_2$ denotes $R_1$, alkoxyalkyl or aralkyl,

$R_3$ denotes alkoxyalkyl,

$R_4$ denotes $R_3$ or alkyl,

$R_7$ denotes alkyl and

$R_8$ denotes $R_7$ or alkoxyalkyl,

the abovementioned radicals having the specific meanings stated above.

3. Mixture of disperse azo dyestuffs according to Claim 1, characterized in that in the formulae mentioned therein

| | |
|---|---|
| Y | denotes CN, |
| V | denotes methyl or ethyl, |
| $R_1$ and $R_2$ | denote ethyl, n-propyl or n-butyl, |
| $R_3$ and $R_4$ | denote methoxyethyl and |
| $R_7$ and $R_8$ | denote ethyl or n-propyl. |

4. Mixtures of disperse azo dyestuffs according to Claim 1, characterized in that the proportion by weight of component I is 20 to 90%, that of component II is 0 to 80% and that of component III is 0 to 80%, with the proviso that the proportion by weight of at least one of the dyestuffs II to III and the proportion by weight of dyestuff I add up to 100%.

5. Mixtures of disperse azo dyestuffs according to Claim 1, characterized in that the proportion by weight of component I is 10 to 90% and that of component III is 10 to 80%.

6. Mixtures of disperse azo dyestuffs according to Claim 1, characterized in that the proportion by weight of component I is 25 to 80% and that of component II is 20 to 75% or the proportion by weight of component I is 30 to 90% and that of component III is 10 to 70%.

7. Mixtures of the disperse azo dyestuffs according to Claim 1, characterized in that they contain a dyestuff of the formula (A)

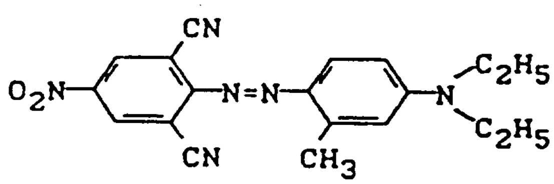

(A)

and at least one dyestuff of the formulae (B and C)

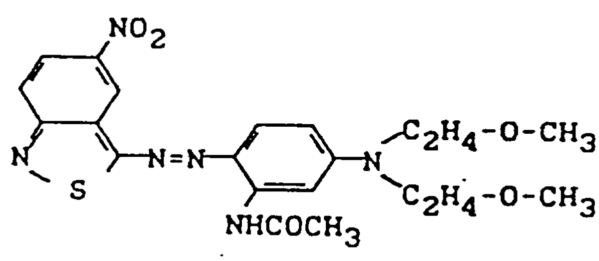

(B)

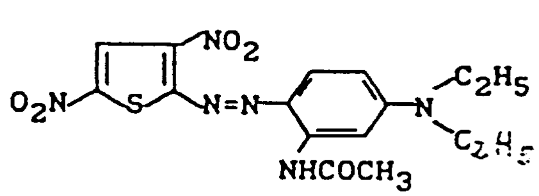

(C)

8. Dyestuff preparations containing mixtures of azo dyestuffs according to Claims 1 to 8.

9. Process for dyeing hydrophobic synthetic fibres, characterized in that dyestuff mixtures or preparations according to Claims 1 to 8 are used.

**Revendications**

1. Mélange de colorants azoïques dispersés d'un angle de couleur $h_{ab}$ de 290 à 300°, déterminé sur une teinture de polyester à une intensité étalon à 1/1 selon DIN 5033/partie 3, caractérisé en ce qu'il contient :

   a) au moins un colorant de formule I

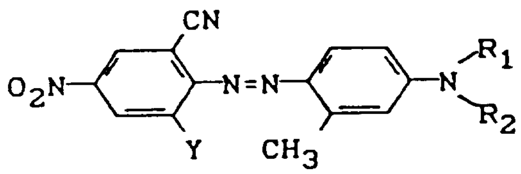

I

   et

   b) au moins un colorant de formules II - III

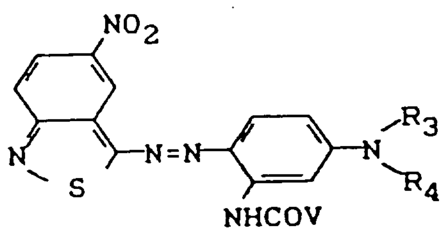

II

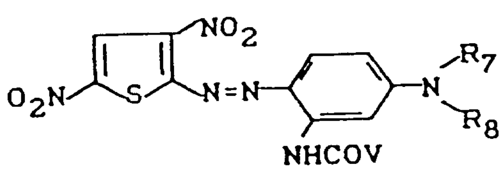

III

dans lesquelles - indépendamment l'un de l'autre -

- Y est $NO_2$ ou CN,
- V est H, un alkyle, un aryle ou un alcoxy,
- $R_1$ est un alkyle, un aralkyle, un alcoxyalkyle ou un alcényle,
- $R_2$ est $R_1$, un chloroalkyle, un aryloxyalkyle ou un alcoxycarbonylalkyle,
- $R_3$ est un alkyle, un aralkyle, un alcoxyalkyle, un hydroxyalkyle, un aryloxyalkyle ou un alcényle,
- $R_4$ est $R_3$, un chloroalkyle $C_2$-$C_4$ ou un alcoxycarbonylalkyle,
- $R_7$ est un alkyle, un aralkyle, un alcoxyalkyle, un hydroxyalkyle, un aryloxyalkyle, un chloroalkyle, un alcoxycarbonylalkyle, un alcényle ou un acyloxyalkyle, et
- $R_8$ est $R_7$,

et les restes acyles, les restes alkylcarbonyles ou arylcarbonyles, sont dans n'importe quelle relation, des restes alkyle, alcényle et alcoxy de 1-4 atomes de carbone et en relation quelconque les restes aryles cités sont des restes phényles, qui peuvent être substitués par Cl ou par un alkyle $C_1$ - $C_4$.

2. Mélanges de colorants azoïques dispersés selon la revendication 1, caractérisés en ce que

- Y est $NO_2$ ou CN,
- V est un alkyle,
- $R_1$ est un alkyle,
- $R_2$ est $R_1$, un alcoxyalkyle ou un aralkyle,
- $R_3$ est un alcoxyalkyle,
- $R_4$ est $R_3$ ou un alkyle,
- $R_7$ est un alkyle, et
- $R_8$ est $R_7$, ou un alcoxyalkyle, dans lesquels les restes cités ont les significations particulières

indiquées plus haut.

**3.** Mélange de colorants azoïques dispersés selon la revendication 1, caractérisé en ce que, dans les formules qui y sont indiquées

| | |
|---|---|
| Y | est CN |
| V | est un méthyle ou un éthyle, |
| $R_1$, $R_2$ | représentent un éthyle, un n-propyle ou un n-butyle, |
| $R_3$, $R_4$ | représentent un méthoxyéthyle, et |
| $R_7$, $R_8$ | représentent un éthyle ou un n-propyle. |

**4.** Mélanges de colorants azoïques dispersés selon la revendication 1 caractérisés en ce que la proportion pondérale de la composante I vaut 20 à 90 %, de la composante II 0 à 80 % et de la composante III 0 à 80 %, à la condition qu'au moins l'un des colorants II à III complète à 100 % le colorant I.

**5.** Mélanges de colorants azoïques dispersés selon la revendication 1, caractérisés en ce que la proportion pondérale de la composante I vaut 10 à 90 % et la composante III 10 à 80 %.

**6.** Mélanges de colorants azoïques dispersés selon la revendication 1, caractérisés en ce que la proportion pondérale de la composante I vaut 25 à 80 % et de la composante II 20 à 75 %, ou de la composante I 30 à 90 % et de la composante III 10 à 70%.

**7.** Mélanges de colorants azoïques dispersés selon la revendication 1, caractérisés en ce que ils comprennent un colorant de formule (A)

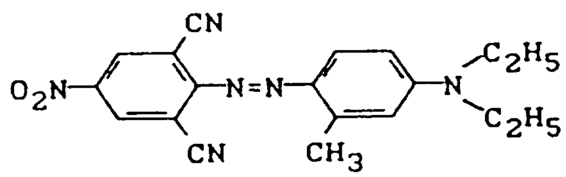

(A)

et au moins un colorant de formules (B) à (C)

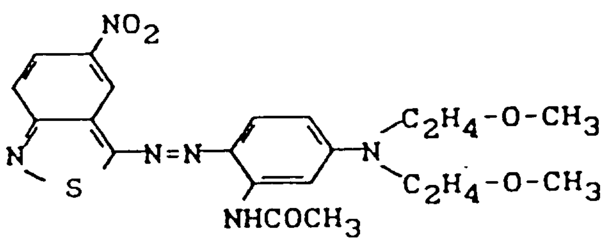

(B)

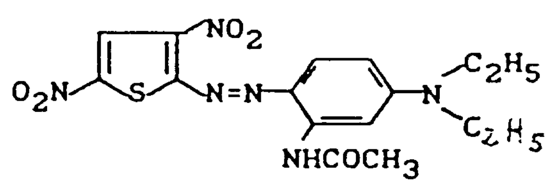

(C)

**8.** Préparations de colorants contenant des mélanges de colorants azoïques selon les revendications 1 à 8.

**9.** Procédés de teinture de fibres synthétiques hydrophobes, caractérisés en ce qu'on utilise des mélanges de colorants ou des préparations selon les revendications 1 à 8.